# EUROPEAN PATENT SPECIFICATION

(11) **EP 0 835 771 B1**
(45) Date of publication and mention of the grant of the patent: **28.08.2002**
(21) Application number: 97202998.7
(22) Date of filing: 30.09.1997
(51) Int. Cl.: B60D 1/52

(54) **Detachable towing-bar**
Abnehmbare Anhängerkupplung
Attelage de remorque détachable

(30) Priority: 01.10.1996 NL 1004166; 29.11.1996 NL 1004645; 05.03.1997 NL 1005437
(43) Date of publication of application: 15.04.1998
(73) Proprietor: Safenat Paneach N.V., Willemstad, Curaçao (AN)
(72) Inventor: Bieleveld, Frans, 5501 EW Veldhoven (NL)
(74) Representative: Van kan, Johan Joseph Hubert, Ir.

(56) References cited:
- EP-A- 0 037 572
- EP-A- 0 223 996
- DE-A- 1 630 928
- DE-A- 1 655 012
- DE-U- 8 907 012
- DE-U- 9 105 268
- DE-U- 9 209 447

## Description

The invention relates to a detachable towing-bar for a vehicle, in particular for a passenger car, whereby the ballrod with its free extremity can be play-free attached in a closed attachment housing of rectangular cross-section, the front end of the housing being provided with two contact surfaces, against which in the attached position corresponding contact-surfaces on the ballrod are pressed, the rear-end upper-side of the housing being provided with an inclined contact surface against which in attached position a corresponding contact surface on the ballrod is pressed, whereby the tensioning forces between ballrod and housing are provoked by a spring-driven and wedge-shaped slide-head of a slider-part.

The invention concerns a demountable towing-bar assembly for a vehicle, in particular for a passenger car, which enables the ballrod with its free extremity, to be quickly attached without the use of tools to the fixed part of the towing-bar assembly by manual insertion of the said free extremity in an attachment-housing that is part of the fixed part of the towing-bar assembly.

At the present-time there are many types of detachable systems on the market and these can be divided in functional terms into two groups, viz:
- Relatively simple and inexpensive to manufacture designs, of which the reliability is assured by means of double locking, but which do not achieve play-free attachment of the ballrod and which consequently rattle audibly during driving on rough road-surfaces.
- A group of technically advanced systems in which the ballrod is attached free-of-play and pre-tensioned in the attachment-housing, thereby ensuring that cyclical loading during use does not lead to rattling noises.

It can be stated of this group that the systems are generally complex and rather expensive to manufacture. A further disadvantage of these designs is that they have a tendency to become jammed when subjected to long-term cyclical loading.

The invention described herewith belongs to the latter group of technically advanced, play-free systems.

A towing bar as described in the preamble of claim 1 is known from DE-U-9105268.8. From said document a demountable towing bar assembly for a vehicle is known comprising a sliding part with a wedge-shaped head. Said sliding part can be displaced along the axis of the ballrod. By means of a gear the sliding part can be moved into a retracted position. In said retracted position the ballrod is inserted into the attachment housing. When the sliding part is moved out of the ballrod under the virtue of the force of a spring in axially direction the wedge-shaped head is brought in contact with the edge of the attachment housing, whereby the contact surface on the ballrod is brought in contact with the contact surface of the housing.

This known towing bar has the disadvantage that by inserting the ballrod into the housing, the ballrod must be held in an inclined position to be able to move the part beyond the edge.

The primary objective of this invention is to make available a technically-advanced detachable towing-bar which is inexpensive to fabricate, in which attachment is achieved automatically and free-of-play and in a stable manner by manual insertion of the ballrod into the attachment-housing. Additional objectives of the invention include the incorporation of various individual advantages of existing designs, as these have become apparent in the light of the very broad state of technological development which currently pertains whilst at the same time attempting to eliminate the numerous individual disadvantages.

Summarized specifically, the objectives of this invention are:
- Cheap and easy fabrication by means of:
   . Simple design
   . A minimum of machining
   . A minimum of parts
- Non-sensitivity with respect to manufacturing tolerances
- Robustness of design and manufacturing processes
- Play-free and pre-tensioned stable attachment
- No tendency to jamming during use
- Minimal dimensioning of the fixed attachment-housing, with regard to the space needed for fixture
- Ability to withstand sand, dust and water

This object is achieved in that the play-free tensioned attachment is achieved by virtue of the fact that at the end of the lower-side of the ballrod a tensioning part is pushed radially outwards with respect to the axis of the ballrod by the previously mentioned wedge shaped and spring-driven slide-head of a sliding part which can be displaced along its axis, and that the tensioning-part pushes against the internal surface at the lower-side of the rectangular cross-sectioned closed attachment-housing, thereby pushing the ballrod upwards until an inclined surface situated on the upper rear-surface of the ballrod interacts with a corresponding inclined surface situated at the rear-end upper-side of the housing, whereby the inclination of the previously mentioned contact surfaces is such that the ballrod is pulled rearwards, causing the first mentioned two contact surfaces on the ballrod to be tensioned against the corresponding contact surfaces which are located on the front-end of the housing.

By the towing bar according to the invention the ballrod can be moved into the housing by a displacement parallel to its axis and to the housing.

This is possible because the tensioning part is moveable radially instead of axially. Furthermore by the towing bar according to the invention no tendency to fixation or jamming occurs.

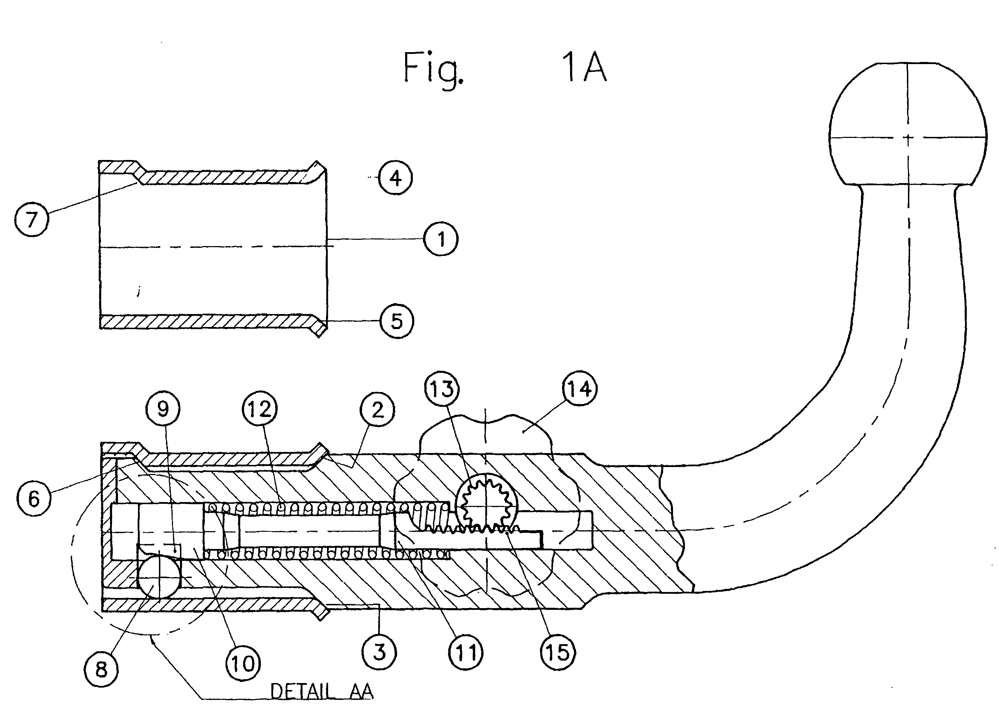

For this purpose, the detachable towing-bar according to the invention (see figure 1) employs a ballrod having three tensioning surfaces (2, 3 and 6) which during attachment press against three abutting surfaces (4, 5 and 7) of the attachment-housing, which has a rectangular and closed cross-section, such that the first two surfaces (2 and 3) on the ballrod, make contact with the two surfaces (4 and 5) which are situated on the front-side of the attachment-housing, while the third tensioning surface (6) situated at the rear of the ballrod makes contact with the surface (7), which is situated at the rear-end of the attachment-housing, on its upper-side. Furthermore, the detachable towing-bar in accordance with this invention is pre-tensioned by means of a tensioning-part which is displaced radially outwards from the ballrod during insertion for attachment, and which thereby presses against the inside surface of the lower-side of the housing, and which causes the ballrod to be pushed upward until the inclined tensioning-surface (6) located on the upper-side of the rear-end of the ballrod, makes contact with the corresponding inclined surface (7), located at the rear-end of the attachment-housing, whereby the inclination of both previously mentioned surfaces is such that the ballrod is thereupon pulled rearwards, causing the other two tensioning surfaces on the ballrod to be pulled against the corresponding surfaces located at the open-end of the attachment-housing, by which means attachment and locking is achieved.

In the above-mentioned way, a play-free and pre-tensioned stable connection is achieved between the removable ballrod and the attachment housing, which is fixed to the towing-vehicle. Because any wear of the contact-surfaces is automatically compensated by movement of the wedge-formed slide-head, which is spring-tensioned and therefore pushes the tensioning-part further outwards, the play-free and pre-tensioned stable connection shall be maintained during the entire lifetime of the towing-bar. Tests have shown that the available displacement is completely adequate to compensate the amount of wear that could take place during lifetime.

The sensitivity of this design to sand, dirt and dust has been reduced to a minimum by virtue of the fact that the detachable ballrod comprises only one single external moving part of minimal dimensions, which part is furthermore, when the ballrod is attached in position, completely protected by the attachment-housing which is closed in cross-section. The front-end of the attachment-housing is almost sealed-off with the ballrod inserted. The open rear-end of the attachment-housing shall in general remain well-protected by the bumper of the vehicle, in which the attachment-housing is usually situated. If required, this rear-end of the attachment-housing can easily be sealed-off, for example by means of a plastic cover-plate.

A version of the towing-bar in accordance with this invention has the special feature that the attachment-housing is fabricated from a cross-sectionally closed rectangular tube-profile, in which all contact-surfaces, both at the front and rear-ends of the housing, are formed exclusively by a single pressing with a mandril and die. When the contact surfaces at the front-end of the housing are chosen in the upper and lower sides, an attachment-housing is realized as shown in figure 1A.

From this figure, it can be seen that minimal dimensioning of the housing can be achieved. The internal dimensions of the housing are, except for a small amount of play, identical to the dimensions of the free-extremity of the ballrod.

A further advantage of the version of the towing-bar shown in figure 1, is that the sensitivity to fabrication-tolerances with respect to the tensioning function can be reduced because the whole upper-surface of the towing-bar, including the two tensioning surfaces (2) and (3) can be milled in one operation, after which the entire machined-surface can be used as a reference for the milling of the third machined-surface (6), while the corresponding attachment surfaces (4), (5) and (7) in the attachment-housing can be formed by a single pressing.

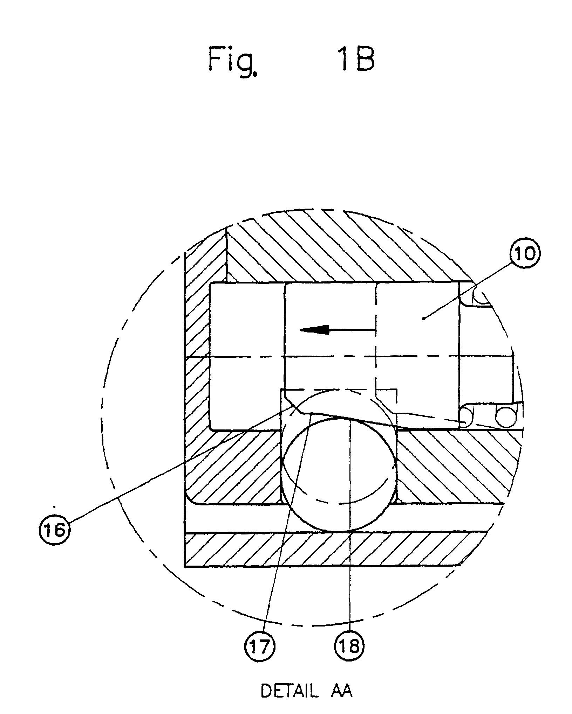

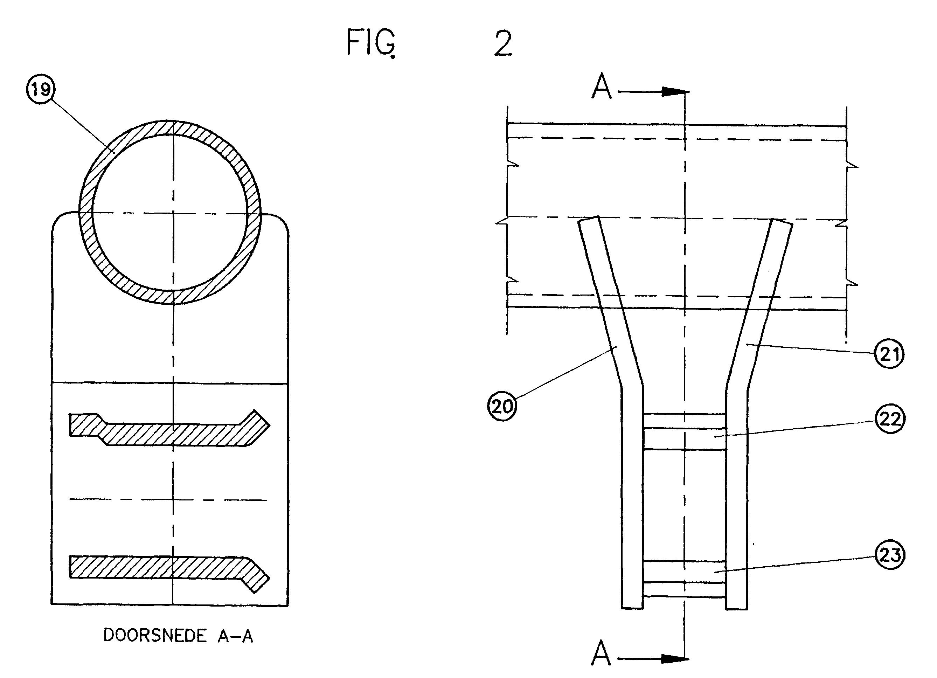

To enable further simplification for the realization of an attachment-housing (see figure 2) having a rectangular cross-section, use can be made of the cross-plates (20 and 21), which are always present on the cross-bar (19) of the towing-bar, between which the attachment-housing is normally welded. In this case, only the pre-formed lower and upper walls (22 and 23) of the attachment-housing are welded between the cross-plates, by which means the rectangular cross-section of the attachment-housing is obtained. The lower and upper walls with machined-surfaces can be fabricated in various straightforward and inexpensive ways. By a shortening and pressing process, they can be fabricated from metal-strip of the correct width, or for larger quantities, manufactured as a sintered product or by means of rolling or extruding a profile, which is then cut to the correct length. The resulting housing is shown in figure 2.
The dimensions of an attachment-housing which is obtained in accordance with the above-mentioned principles, are smaller than the previously described version.

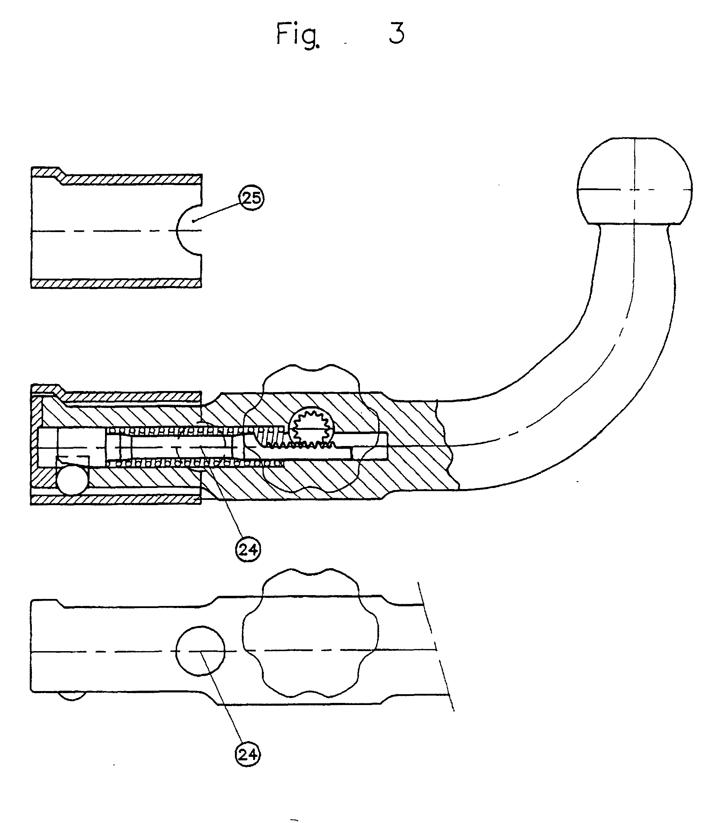

Another version of the towing-bar in accordance with the invention (see figure 3) makes use of cylindrical lugs (24) as known from state-of-art technique, which are attached on the side of the ballrod (EP 0223996) and which are accommodated in cylindrical openings (25) situated at the front-end of the retention-house. In this version, the third tensioning surface in the attachment-housing can be situated as described above, namely at the rear-side of the upper-wall of the attachment-housing. Although this version is not a prefered choice, the attachment-housing can be formed in a simple way from a rectangular tube in which on the rear-side a tensioning surface has been formed by means of pressing-process using a mandril and die and in which the cylindrical openings in the side-walls are formed by machining.
This version also facilitates the advantages of minimal dimensions and protection against dirt.

A special feature of a preferred version of the towing-bar according to this invention (see figure 1) is that the tensioning-part which emerges from underneath of the ballrod consists of a cylindrical roller within a rectangular guidance-hole which is pushed outward by a wedge-formed head (10) of a sliding-part (11) which is contained within the ballrod and which can move along its axis. For purposes of automatic locking, the sliding-part is moved by a compression-spring (12), while for purposes of manual detachment, the sliding-part (15) is driven by a gear-wheel, which is connected to a rotary knob and which meshed with a rack-gearing on a sliding-part. The wedge-formed head of the sliding-part (see figure 16) is provided with a specially profiled form in which 3 different surfaces are distinguishable: namely a progressively inclining surface (16) which provides for rapid projection of the roller during the initial axial movement of the sliding-part, a horizontal neutral-surface (17) which allows for lateral movement of the sliding-part without causing vertical movement of the roller, and subsequently the actual tensioning surface (18) which by virtue of its small inclination, can convert the relatively small axial spring-tension on the sliding-part into a large tensioning force. The horizontal neutral surface (17) which is situated between the two inclined surfaces fulfills in this way a locking-function. Under normal working conditions, the play-free and locked condition is assured because the horizontal component of the forces which are transmitted via the roller to the sliding-part, is smaller than the sum of the spring-tension which operates on the sliding-part together with the frictional forces which need to be overcome to enable axial movement of the sliding-part. However, when under exceptional circumstances the forces operating on the ballrod are such that there is a tendency to slide the sliding-part back into the un-locking direction, this movement will automatically be arrested when the slide-head has reached a position towards the right such that the line-of-contact between the roller and the sliding-part has reached the neutral-surface, at which position the horizontal component of the force on the slide-head disappears. In this case, the sum of the spring-tension and the frictional forces dominates, whereby the locking-function is ensured.

An important advantage of utilizing the cylindrical roller in its guidance-hole as tensioning-part is that the tendency of the system to jam under dynamic conditions, is greatly suppressed, even totally absent when designed suitably. The explanation for this is that in this construction microscopic welding on the contact surfaces of the tensioning part, which is a major cause of jamming of a system, is avoided. This microscopic welding in other systems is caused by microscopic sliding movements between the contact surfaces of the tensioning part and the attachment-housing, which are the result of cyclical working loads on the ballrod, combined with very large local surface pressures (Hertz loads). Due to this combination of continuous micro-sliding movements and large Hertz loads, every trace of lubrication or impurity at the points of contact eventually disappears, resulting in a completely uncontaminated metallic surface contact. At these points the microscopic welding occurs, which hinder detachment, or even in some cases prevent it, without the use of extreme operating force or even the application of blows to the ballrod using a heavy object.
In the roller/guidance-hole construction according to this invention, the tensioning-force, which is applied in an upward direction by the retention-housing to the rear-end of the ball-rod, is transferred via a roller-element. The advantage of this is that possible microscopic movements between the various parts, caused by cyclical working loads, do not lead to sliding movements between the contact surfaces, but to microscopic rolling movements of the roller. An essential condition for micro-welding is thereby obviated. Of equal importance for detachment using little force, is that the roller has within the guidance-hole an amount of radial play. Therefore, when during detachment the sliding-piece is withdrawn by manual rotation of the operating-knob, the roller, which is under pressure between the slide-head and the underneath of the attachment-housing will perform initially a rolling movement, enabling thereby the first de-tensioning to take place. When the roller after the initial rolling movement comes in contact with the right-hand wall of the guidance-hole, a sliding movement will take place between the contact surfaces. At this point, however, the load will already have been significantly reduced, whereby the frictional forces which need to be overcome, will have been greatly diminished. Tests have demonstrated that jamming does not occur in a towing-bar having a roller-guidance-hole construction in accordance with the invention, even under extreme alternating loads. Herewith an important objective of the invention has been realized.

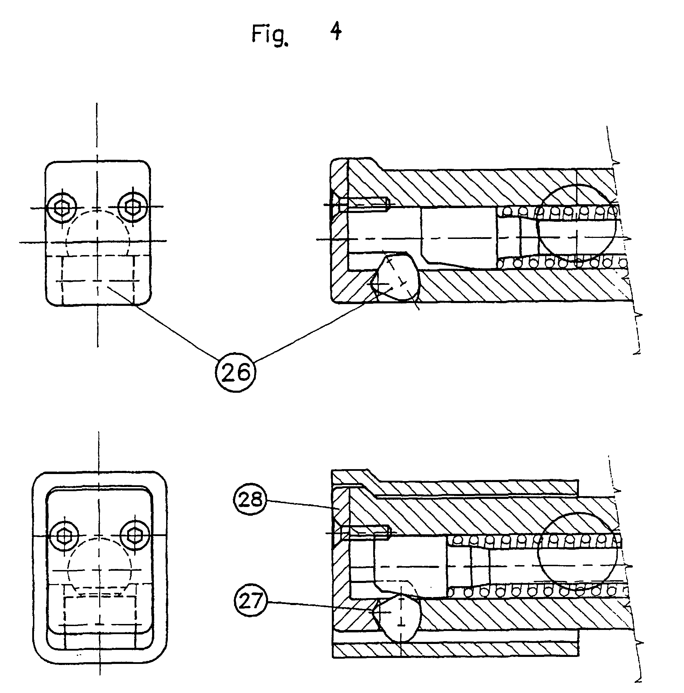

A version of the towing-bar according to the invention (see figure 4) contains a tensioning-part comprising a specially formed cam (26) which can be partially pushed-outward by the wedge-shaped slide-head, thereby rotating around the fulcrum of a socket-joint which is formed in a die-cast inserted element (28) in the ballrod.
The space in which the cam is located and in which it can rotate between two extremes, is for a part limited by a special milled-out cavity in the ballrod and for the other part by inserted part, preferably fabricated by die-casting, which is fixed to the ballrod by some means or other.

## Claims

1. Detachable towing-bar for a vehicle, in particular for a passenger car, whereby the ballrod with its free extremity can be play-free attached in a closed attachment housing of rectangular cross-section, the front end of the housing being provided with two contact surfaces (4, 5), against which in the attached position corresponding contact-surfaces (2, 3) on the ballrod are pressed, the rear-end upper-side of the housing being provided with an inclined contact surface (7) against which in attached position a corresponding contact inclined surface (6) on the ballrod is pressed, whereby the tensioning forces between ballrod and housing are provoked by a spring-driven and wedge-shaped slide-head (10) of a slider-part, **characterized in that** the play-free tensioned attachment is achieved by virtue of the fact that at the end of the lower-side of the ballrod a tensioning part (8, 26) is pushed radially outwards with respect to the axis of the ballrod by the previously mentioned wedge shaped and spring-driven slide-head (10) of a sliding part which can be displaced along its axis, and that the tensioning-part (8, 26) pushes against the internal surface at the lower-side of the rectangular cross-sectioned closed attachment-housing, thereby pushing the ballrod upwards until said inclined surface (6) situated on the upper rear-surface of the ballrod interacts with a corresponding inclined surface (7) situated at the rear-end upper-side of the housing, whereby the inclination of the previously mentioned contact surfaces is such that the ballrod is pulled rearwards, causing the first mentioned two contact surfaces on the ballrod (2, 3) to be tensioned against the corresponding contact surfaces (4, 5) which are located on the front-end of the housing (see figures 1 through 4).

2. Towing bar according to claim 1, **characterized in that** the tensioning part (8) comprises a roller (8) within a guidance hole in the ballrod, which roller (8) can be pushed radially outwards with respect to the axis of the ballrods by the wedge-shaped slide-head (10) of the sliding part.

3. Towing-bar according to claim 1, **characterized in that** the attachment-housing is formed from a rectangular tube, in which the contact-surfaces are formed by pressing or machining.

4. Towing-bar according to claim 1 or 2, **characterized in that** the contact-surfaces at the front-end of the attachment-housing are located in the upper and lower sides of the housing.

5. Towing-bar according to claim 1 or 2, **characterized in that** the contact-surfaces at the front-end of the housing are located on the sides of the housing in the form of cylindrical or more-or-less cylindrical openings in which cylindrical or mor-or-less cylindrical lugs are captured, which are located on the side of the ballrod.

6. Towing-bar according to claims 1, 2 or 3, **characterized in that** the rectangular cross-sectioned closed attachment-housing is not fabricated as a separate part that is later fixed to the towing-bar between two cross-plates connected to the cross-tube of the towing-bar, but which is formed by welding the pre-formed upper and lower walls of the housing direct in the correct position between the cross-plates connected to the cross-tube of the towing-bar, by which means these cross-plates also serve as side-walls of the housing.

7. Towing-bar according to one of the above mentioned claims, **characterized in that** tensioning-part that is pushed outward from the lower-side of the ballrod, consists of a roller (8) which is constrained in a vertical rectangular guidance-hole (9).

8. Towing-bar according to claim 7, **characterized in that** the vertical guidance-hole in which the roller is situated, is fabricated from a separate inserted part, that can be produced inexpensively, for example by die-casting, and that can be attached by some means or other to the lower side and the extremity of the towing-bar.

9. Towing-bar according to the claims 1 through 6, **characterized in that** the tensioning-part at the lower-side of the ballrod which is projected outward during tensioning, consists of rotating cam which can be rotated in a socket-joint into an outward position by a wedge-shaped head of a sliding-piece which can be displaced in an axial direction by spring pressure.

10. Towing-bar according to claim 8, **characterized in that** the boundary of the space in which the rotating cam can be moved, on the one side is formed by a profiled machined surface in the towing-bar, and the other side by a separate insertion-element in the ballrod, which can be fabricated inexpensively by die-casting.

## Patentansprüche

1. Abnehmbare Anhängerkupplung für ein Fahrzeug, insbesondere einen Personenwagen, bei der die Kugelstange mit ihrem freien Ende spielfrei in einem geschlossenem Befestigungsgehäuse mit rechteckigem Querschnitt befestigt werden kann, wobei das Vorderende des Gehäuses mit zwei Kontaktflächen (4,5) versehen ist, gegen die in der befestigten Position entsprechende Kontaktflächen (2,3) an der Kugelstange gepreßt werden, und wobei die Oberseite des rückwärtigen Endes des Gehäuses mit einer geneigten Kontaktfläche (7) versehen ist, gegen die in der befestigten Position eine entsprechende geneigte Kontaktfläche (6) an der Kugelstange gepreßt wird, wobei die Spannkräfte zwischen der Kugelstange und dem Gehäuse von einem über eine Feder angetriebenen und keilförmig ausgebildeten Gleitkopf (10) eines Gleitteiles verursacht werden, **dadurch gekennzeichnet, daß** die spielfreie Verspannung aufgrund der Tatsache erreicht wird, daß am Ende der Unterseite der Kugelstange ein Spannteil (8,26) relativ zur Achse der Kugelstange vom vorher erwähnten keilförmigen und durch eine Feder angetriebenen Gleitkopf (10) eines Gleitteiles, der entlang seiner Achse verschoben werden kann, radial auswärts gedrückt wird und daß das Spannteil (8,26) gegen die Innenfläche an der Unterseite des rechteckförmigen geschlossenen Befestigungsgehäuses drückt, so daß auf diese Weise die Kugelstange nach oben gedrückt wird, bis die geneigte Fläche (6), die an der Oberseite des rückwärtigen Endes der Kugelstange angeordnet ist, mit einer entsprechenden geneigten Fläche (7) zusammenwirkt, die an der Oberseite des rückwärtigen Endes des Gehäuses angeordnet ist, wobei die Neigung der vorstehend erwähnten Kontaktflächen derart ist, daß die Kugelstange nach hinten gezogen wird, wodurch die zuerst erwähnten zwei Kontaktflächen an der Kugelstange (2,3) gegen die entsprechenden Kontaktflächen (4,5), die am Vorderende des Gehäuses angeordnet sind (siehe die Figuren 1-4), gespannt werden.

2. Anhängerkupplung nach Anspruch 1, **dadurch gekennzeichnet, daß** das Spannteil (8) eine Rolle (8) innerhalb eines Führungslochs in der Kugelstange aufweist, wobei die Rolle (8) durch den keilförmigen Gleitkopf (10) des Gleitteiles in bezug auf die Achse der Kugelstange radial nach außen gedrückt werden kann.

3. Anhängerkupplung nach Anspruch 1, **dadurch gekennzeichnet, daß** das Befestigungsgehäuse aus einem Rechteckrohr geformt ist, in das die Kontaktflächen durch Pressen oder Bearbeiten geformt sind.

4. Anhängerkupplung nach Anspruch 1 oder 2, **dadurch gekennzeichnet, daß** die Kontaktflächen am Vorderende des Befestigungsgehäuses in der oberen und unteren Seite des Gehäuses angeordnet sind.

5. Anhängerkupplung nach Anspruch 1 oder 2, **dadurch gekennzeichnet, daß** die Kontaktflächen am Vorderende des Gehäuses auf den Seiten des Gehäuses in der Form von zylindrischen oder mehr oder weniger zylindrischen Öffnungen angeordnet sind, in denen zylindrische oder mehr oder weniger zylindrische Nasen eingefangen sind, die auf der Seite der Kugelstange angeordnet sind.

6. Anhängerkupplung nach Anspruch 1,2 oder 3, **dadurch gekennzeichnet, daß** das im Querschnitt rechteckige geschlossene Befestigungsgehäuse nicht als separates Teil hergestellt ist, das später an der Anhängerkupplung zwischen zwei Querplatten, die mit dem Querrohr der Anhängerkupplung verbunden sind, befestigt wird, sondern durch Verschweißen der vorgeformten oberen und unteren Wand des Gehäuses direkt in der korrekten Position zwischen den mit dem Querrohr der Anhängerkupplung verbundenen Querplatten geformt ist, wodurch diese Querplatten auch als Seitenwände des Gehäuses dienen.

7. Anhängerkupplung nach einem der vorangehenden Ansprüche, **dadurch gekennzeichnet, daß** das Spannteil, das von der unteren Seite der Kugelstange nach außen gedrückt wird, aus einer Rolle (8) besteht, die in einem vertikalen rechteckigen Führungsloch (9) gehalten wird.

8. Anhängerkupplung nach Anspruch 7, **dadurch gekennzeichnet, daß** das vertikale Führungsloch, in dem die Rolle angeordnet ist, aus einem separaten eingesetzten Teil hergestellt ist, das billig hergestellt werden kann, beispielsweise durch Druckguß, und das über irgendwelche Mittel an der Unterseite und am Ende der Anhängerkupplung befestigt werden kann.

9. Anhängerkupplung nach einem der Ansprüche 1 - 6, **dadurch gekennzeichnet, daß** das Spannteil an der Unterseite der Kugelstange, das während des Spannens nach außen vorsteht, aus einem rotierenden Nocken besteht, der von einem keilförmigen Kopf eines Gleitteiles, das durch Federdruck in einer axialen Richtung verschoben werden kann, in einem Kugelgelenk in eine Außenposition gedreht werden kann.

10. Anhängerkupplung nach Anspruch 8, **dadurch gekennzeichnet, daß** die Grenze des Raumes, in der der rotierende Nocken bewegt werden kann, einerseits von einer profilierten bearbeiteten Fläche in der Anhangerkupplung und andererseits von einem separaten Einsatzelement in der Kugelstange, das auf billige Weise mittels Druckguß hergestellt werden kann, gebildet wird.

## Revendications

1. Barre de remorquage amovible pour un véhicule, en particulier, pour une voiture particulière, dans laquelle la tige à boule peut, avec son extrémité libre, être fixée sans jeu dans un logement de fixation fermé de section transversale rectangulaire, l'extrémité avant du logement comportant deux surfaces de contact (4, 5) contre lesquelles, dans la position fixée, des surfaces de contact correspondantes (2, 3) sur la tige à boule sont appliquées, la face supérieure d'extrémité arrière du logement comportant une surface de contact inclinée (7) contre laquelle, dans la position fixée, une surface inclinée de contact correspondante (6) sur la tige à boule est appliquée, dans laquelle les efforts d'application entre la tige à boule et le logement sont provoqués par une tête de coulisseau entraînée par ressort et en forme de coin (10) d'une partie formant coulisseau, **caractérisée en ce que** la fixation par application sans jeu est obtenue compte tenu du fait qu'à l'extrémité de la face inférieure de la tige à boule, une partie d'application (8, 26) est poussée radialement vers l'extérieur par rapport à l'axe de la tige à boule par la tête de coulisseau en forme de coin et entraînée par ressort (10) mentionnée précédemment d'une partie coulissante qui peut être déplacée le long de son axe, et **en ce que** la partie d'application (8, 26) appuie contre la surface interne au niveau de la face inférieure du logement de fixation fermé à section transversale rectangulaire, poussant ainsi la tige à boule vers le haut jusqu'à ce que ladite surface inclinée (6) située sur la surface arrière supérieure de la tige à boule coopère avec une surface inclinée correspondante (7) située sur la face supérieure d'extrémité arrière du boîtier, de telle sorte que l'inclinaison des surfaces de contact mentionnées précédemment est telle que la tige à boule est tirée vers l'arrière, provoquant l'application des deux premières surfaces de contact sur la tige à boule (2, 3) mentionnées contre les surfaces de contact correspondantes (4, 5) qui sont situées sur l'extrémité avant du logement (voir figures 1 à 4).

2. Barre de remorquage selon la revendication 1, **caractérisée en ce que** la partie d'application (8) comprend un rouleau (8) à l'intérieur d'un orifice de guidage dans la tige à boule, lequel rouleau (8) est poussé radialement vers l'extérieur par rapport à l'axe de la tige à boule par la tête de coulisseau en forme de coin (10) de la partie coulissante.

3. Barre de remorquage selon la revendication 1, **caractérisée en ce que** le logement de fixation est formé à partir d'un tube rectangulaire, dans lequel les surfaces de contact sont formées par emboutissage ou usinage.

4. Barre de remorquage selon la revendication 1 ou 2, **caractérisée en ce que** les surfaces de contact sur l'extrémité avant du logement de fixation sont situées sur les faces supérieures et inférieures du logement.

5. Barre de remorquage selon la revendication 1 ou 2, **caractérisée en ce que** les surfaces de contact à l'extrémité avant du logement sont situées sur les faces du logement sous la forme d'ouvertures cylindriques ou sensiblement cylindriques dans lesquelles des pattes cylindriques ou sensiblement cylindriques, qui sont situées sur la face de la tige à boule, sont retenues.

6. Barre de remorquage selon les revendications 1, 2 ou 3, **caractérisée en ce que** le logement de fixation fermé de section transversale rectangulaire n'est pas réalisé sous la forme d'un composant distinct qui est fixé ultérieurement sur la barre de remorquage entre deux plaques transversales reliées au tube transversal de la barre de remorquage, mais est formé par soudage des parois supérieures et inférieures préformées du logement directement dans la position correcte entre les plaques transversales reliées au tube transversal de la barre de remorquage, grâce à quoi ces plaques transversales servent aussi de parois latérales au logement.

7. Barre de remorquage selon l'une des revendications précédentes, **caractérisée en ce que** la partie d'application qui est poussée vers l'extérieur par rapport à la face inférieure de la tige à boule, consiste en un rouleau (8) qui est appliqué dans un orifice de guidage rectangulaire vertical (9).

8. Barre de remorquage selon la revendication 7, **caractérisée en ce que** l'orifice de guidage vertical dans lequel est placé le rouleau est réalisé sous la forme d'un composant rapporté distinct qui peut être produit de manière peu onéreuse, par exemple, par moulage en coquille, et qui peut être fixé par certains moyens ou d'autres sur la face inférieure et l'extrémité de la barre de remorquage.

9. Barre de remorquage selon les revendications 1 à 6, **caractérisée en ce que** la partie d'application sur la face inférieure de la tige à boule qui est en saillie vers l'extérieur au cours de l'application, consiste en une came tournante qui peut être tournée dans une liaison par emboîtement vers une position orientée vers l'extérieur par une tête en forme de coin d'une pièce coulissante qui peut être déplacée dans une direction axiale par un un effort de rappel élastique.

10. Barre de remorquage selon la revendication 8, **caractérisée en ce que** la limite de l'espace dans lequel la came tournante peut être déplacée est formée, sur la première face, par une surface profilée usinée dans la barre de remorquage, et sur l'autre face, par un élément rapporté distinct sur la tige à boule qui peut être réalisé de manière peu onéreuse par moulage en coquille.
